(19) **Europäisches Patentamt**

**European Patent Office**

**Office européen des brevets**

(11) Publication number : **0 248 527 B1**

(12) **EUROPEAN PATENT SPECIFICATION**

(45) Date of publication of patent specification :
01.02.95 Bulletin 95/05

(51) Int. Cl.⁶ : **G10H 1/00,** G10H 7/00,
G10K 11/00

(21) Application number : **87303803.8**

(22) Date of filing : **29.04.87**

(54) **Digital reverberation system.**

Divisional application 93202895.4 filed on
29/04/87.
The file contains technical information
submitted after the application was filed and
not included in this specification

(30) Priority : **02.05.86 US 859868**
**17.10.86 US 920701**

(43) Date of publication of application :
**09.12.87 Bulletin 87/50**

(45) Publication of the grant of the patent :
**01.02.95 Bulletin 95/05**

(84) Designated Contracting States :
**DE FR GB IT NL SE**

(56) References cited :
**GB-A- 2 047 508**
**US-A- 3 967 099**
**US-A- 4 350 845**
**US-A- 4 475 229**

(73) Proprietor : **THE BOARD OF TRUSTEES OF
THE LELAND STANFORD JUNIOR
UNIVERSITY**
**350 Cambridge Avenue,**
**Suite 250**
**Palo Alto, California 94306 (US)**

(72) Inventor : **Smith, Julius O.**
**1700 Santa Cruz Boulevard**
**Menlo Park California 94025 (US)**

(74) Representative : **Crawford, Andrew Birkby et al**
**A.A. THORNTON & CO.**
**Northumberland House**
**303-306 High Holborn**
**London WC1V 7LE (GB)**

## Description

This invention relates to the field of digital signal processing and particularly to signal processing useful in digital music synthesis and other applications.

Digital music synthesis has attracted increased interest as data processors have undergone new developments which provide increased performance capabilities. Digital music synthesis has many applications such as the synthesis of stringed, reed and other instruments and such as the synthesis of reverberation.

In actual practice, it has been difficult to provide satisfactory models of music instruments, based upon quantitative physical models, which can be practically synthesized on a real-time basis using present-day computers and digital circuitry.

Most traditional musical instruments, such as woodwinds and strings, have been simulated by additive synthesis which consists of summing together sinusoidal harmonics of appropriate amplitude, or equivalently by repeatedly reading from a table consisting of one period of a tone (scaled by an "amplitude function") to "play a note." Another method consists of digitally sampling a real musical sound, storing the samples in digital memory, and thereafter playing back the samples under digital control. FM synthesis as described, for example, in U.S. patent 4,018,121, has also been successful in synthesizing many musical sounds including brasses, woodwinds, bells, gongs, and some strings. A few instruments have been simulated by "subtractive synthesis" which shapes the spectrum of primitive input signals using digital filters.

All of the foregoing methods (with the occasional exception of subtractive synthesis) have the disadvantage of not being closely related to the underlying physics of sound production. Physically accurate simulations are expensive to compute when general finite-element modeling techniques are used.

Digital reverberation has also been difficult to achieve. Although digital music synthesis has employed digital reverberation as a post-processing function for many years, there still remains a need to be able to simulate with digital signal processing the quality of reverberation which exists in natural listening-space environments. The basic acoustics of reverberation in natural listening-space environments, such as concert halls, has a long history with many different design theories. The goal of digital reverberation is to produce digital signal processing methods which simulate the effect that a good concert hall or other good "listening space" has on sound. This goal is made difficult because typical good listening spaces are inherently large-order, complex acoustical systems which cannot be precisely simulated in real-time using commonly available computing techniques.

In architectural acoustics, an understanding of digital reverberation is important in the design of concert halls with good acoustical qualities. In digitally synthesized music, reverberation is a part of the synthesized instrumental ensemble and provides enrichment to the sound quality. For these reasons, there have been many attempts to capture the musically important qualities of natural reverberation in digital music synthesis.

Digital room simulation (reverberation) has been implemented by simulating specular reflection in actual or approximate concert-hall geometries. The diffusive scattering of sound in such natural listening environments must be considered in order to obtain high-quality reverberation models. However, practical models which accommodate diffusing reflections have been beyond the reach of present computing power when applied to listening spaces of nominal size over the audio frequency band.

In another implementation of digital reverberation, an approximation to the impulse response between two spatial points in a real concert hall has been recorded. The effect of the hall on sound between these two points can be accurately simulated by convolving the measured impulse response with the desired source signal. Again, this implementation leads to a prohibitive computational burden which is two to three orders of magnitude beyond the real-time capability of typical present-day mainframe computers.

The current state of high-quality digital reverberation based upon large (concert hall) spaces, although well understood, is too expensive to synthesize by computation. Because there is much detail in natural reverberation that is not important perceptually, models for reverberation need to be simplified so as to become computationally practical.

One example of a computationally simple model relies upon convolving unreverberated sound with exponentially decaying white noise thereby producing the heretofore best known artificial reverberation. The digital reverberator designs based upon quantitative physical models need to be replaced by models based upon simple computations which retain the qualitative behavior of natural listening space reverberation.

Some basic building blocks of presently known digital reverberators include cascaded and nested allpass networks, recursive and non-recursive comb filters, tapped delay lines, and lowpass filters. The early reflections can be exactly matched for a fixed source and listener position using a tapped delay line, and the late reverberation can be qualitatively matched using a combination of allpass chains, comb filters, and lowpass filters. Using a lowpass filter in the feedback loop of a comb filter simulates air absorption and nonspecular reflection. These known techniques for reverberation have been the basis for reverberation design for more than a decade. Although these elements do provide some essential aspects of reverberation, especially for smoothly varying sounds at low reverberation levels, they do not provide reverberation on a par with excellent natural listening-space environments.

In accordance with the above background, there is a need for techniques for synthesizing strings, winds, and other musical instruments including reverberators in a manner which is both physically meaningful and computationally efficient. There is a need for the achievement of natural and expressive computer-controlled performance in ways which are readily comprehensible and easy to use.

One example of a known digital reverberation system is disclosed in US-A-4475229. This patent illustrates a branched network of digital waveguides interconnected by junctions, provided with means for introducing losses into signals propagating in the network. Each waveguide includes two digital delay lines running parallel to each other for propagating signals in opposite directions. The network as a whole may have a circular or linear configuration.

The present invention provides a digital reverberation system comprising: a branched network including a plurality of branches formed of digital waveguides and a plurality of junctions interconnecting the waveguides, input means for providing to the network an audio input signal to be reverberated; output means for providing at least one reverberation output signal from the network; and means for introducing losses into signals propagating in the network; wherein:

each waveguide includes two digital delay lines running parallel to each other for propagating signals in opposite directions and has a first end and a second end, said first end having an input to a first of said two delay lines and an output from a second of said two delay lines and said second end having an input to the second delay line and an output from the first delay line, each waveguide having at least one of its ends connected to a junction;

characterised in that at least one of the junctions has at least three waveguide ends connected to it and signals arriving at each junction from a particular waveguide end are partially transmitted to every other waveguide end connected to the junction and partially reflected back to said particular waveguide end.

The use of three junction waveguides is known per se in the art of analogue filters. Thus, for example, US-A-3967099 discloses various analogue filters having 3-port functions. In the example of Figure 17 signals from one waveguide are reflected to the next in a circulating manner. There is no partial transmission from one waveguide end to every other waveguide end at the junction.

The present invention is a signal processor formed using digital waveguide networks. The digital waveguide networks have signal scattering junctions. A junction connects two waveguide sections together or terminates a waveguide. The junctions are constructed from conventional digital components such as multipliers, adders, and delay elements. The number of multiplies and additions determines the number of signal-scattering junctions that can be implemented in the waveguide network, and the number of delays determines the total delay which can be distributed among the waveguides interconnecting the junctions in the waveguide network.

The waveguides of the present invention include a first rail for conducting signals from stage to stage in one direction and a second rail for conducting signals from stage to stage in the opposite direction. The accumulated delay along the first rail is preferably substantially equal to the accumulated delay along the second rail so that the waveguide is balanced. The first rail is connected to the second rail at junctions so that signals conducted by one rail are also conducted in part by the other rail.

Lossless waveguides used in the present invention are bi-directional delay lines which sometimes include embedded allpass filters. Losses are introduced as pure attenuation or lowpass filtering in one or both directions.

Certain embodiments of the invention will now be described by way of example only and with reference to the accompanying drawings. The following description includes details of digital reverberation systems according to the invention as well as tone generation systems for synthesis of musical instruments which may be coupled to such reverberation systems. The tone generation systems do not form part of the present invention.

In the drawings:

FIG. 1 depicts a simple closed waveguide network, suitable for use in a reverberation system according to the invention.

FIG. 2 depicts a 3-port waveguide network.

FIG. 3 depicts a junction of two waveguides.

FIG. 4 depicts a cascade waveguide network suitable for the present invention.

FIG. 5 depicts one embodiment of a cascade waveguide network section.

FIG. 6 depicts another embodiment of a cascade waveguide network section.

FIG. 7 depicts a third embodiment of a cascade waveguide network section.

FIG. 8 depicts a pipelined embodiment of a waveguide filter.

FIG. 9 depicts a travelling pressure wave at a general point within a waveguide section.

FIG. 10 depicts a normalized-waveguide digital filter.

FIG. 11 depicts a wave-normalized-waveguide junction.

FIG. 12 depicts a transformer junction.

FIG. 13 depicts transformer-coupled waveguide junction.

FIG. 14 depicts a non-linear junction, controlled by a control variable, and connected through a plurality of ports to a plurality of waveguides.

FIG. 15 depicts a waveguide reverberator.

FIG. 16 depicts a typical waveguide employed in the FIG. 15 reverberator.

FIG. 17 depicts details of the FIG. 16 waveguide.


DETAILED DESCRIPTION


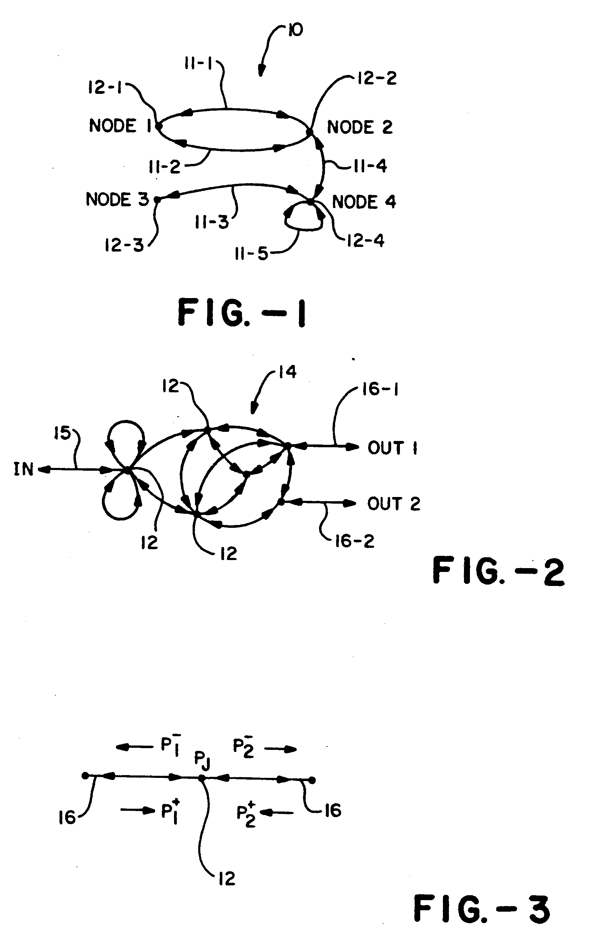

Lossless Networks - FIG. 1

In FIG. 1 a network 10 is a closed interconnection of bi-directional signal paths 11. The signal paths 11 are called branches or waveguides, designated 11-1, 11-2, 11-3, 11-4, and 11-5 and the interconnection points are called nodes or junctions, designated 12-1, 12-2, 12-3, and 12-4. An example of a simple network is shown in FIG. 1 where each signal path is bi-directional, meaning that in each waveguide there is a signal propagating in one direction and an independent signal propagating in the other direction. When a signal reaches a junction, one component is partially reflected back along the same waveguide, and other components are partially transmitted into the other waveguides connected to the junction. The relative strengths of the components of the transmitted or "scattered" signals at each junction are determined by the relative characteristic impedances of the waveguides at the junction. In FIG. 1, the waveguides 11 intersect at the junctions 12.

A lossless waveguide, such as each of the waveguides in FIG. 1, is defined specifically as a lossless bi-directional signal branch. In the simplest case, each branch or waveguide 11 in a waveguide network 10 is merely a bi-directional delay line. The only computations in the network take place at the branch intersection points (nodes or junctions). More generally, a lossless waveguide branch may contain a chain of cascaded allpass filters. For practical reverberator and other designs, losses are introduced in the form of factors less than 1 and/or low pass filters with a frequency response strictly bounded above by 1 in magnitude.

A closed lossless network preserves total stored signal energy. Energy is preserved if, at each time instant, the total energy stored in the network is the same as at any other time instant. The total energy at any time instant is found by summing the instantaneous power throughout the network waveguides 11. Each signal sample within the network contributes to instantaneous power. The instantaneous power of a stored sample is the squared amplitude times a scale factor, $g$. If the signal is in units of "pressure", "force", or equivalent, then $g = 1/Z$, where $Z$ is the characteristic impedance of the waveguide 11 medium. If the signal sample instead represents a "flow" variable, such as volume-velocity, then $g = Z$. In either case, the stored energy is a weighted sum of squared values of all samples stored in the digital network 10.


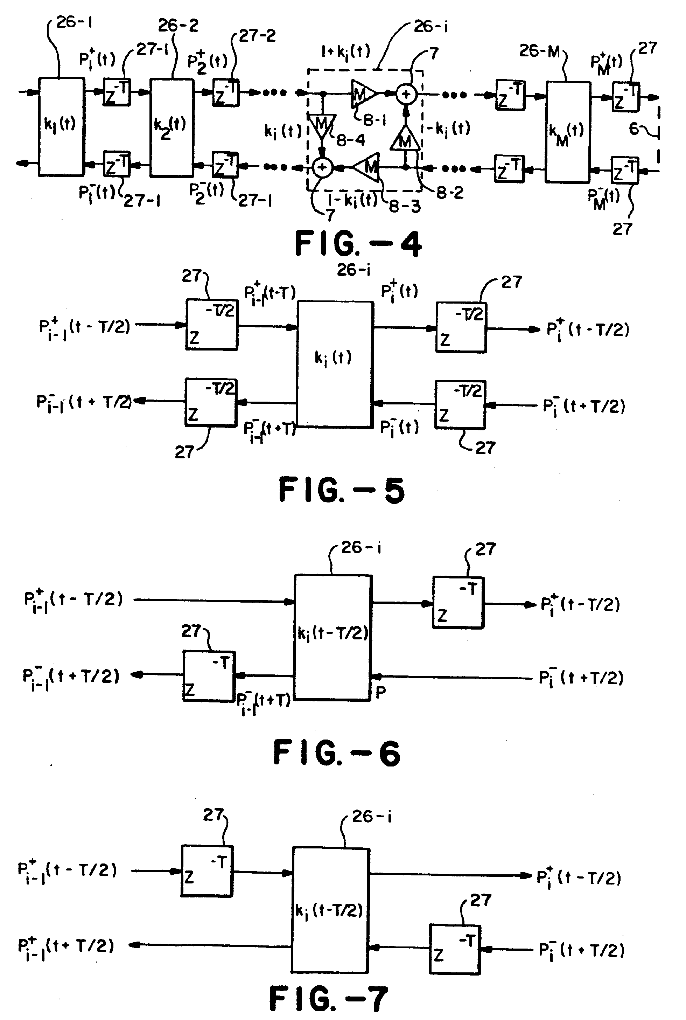

N-Port Network - FIG. 2

In FIG. 2, an N-port network 14 is shown in which for N=3, three waveguides, called ports, leave the network with one port 15 designated for input and two ports 16-1 and 16-2 designated for output. Such a structure is suitable, for example, for providing stereo reverberation of a single channel of sound. Note, however, that really in FIG. 2 there are three inputs(15, 16-2) and three out-puts(15, 16-1, 16-2) because in an N-port, each waveguide connected to the network provides both an input and an output since each waveguide is bi-directional.

An N-port network 14 of FIG. 2 is lossless if at any time instant, the energy lost through the outputs, equals the total energy supplied through the inputs, plus the total stored energy. A lossless digital filter is obtained from a lossless N-port by using every port as both an input and an output. This filter is the general multi-input, multi-output allpass filter.

An N-port network 14 is linear if superposition holds. Superposition holds when the output in response to the sum of two input signals equals the sum of the outputs in response to each individual input signal. A network is linear if every N-port derived from it is linear. Only linear networks can be restricted to a large and well-understood class of energy conserving systems.

### Lossless Scattering - FIG. 3

Consider a parallel junction of N lossless waveguides of characteristic impedance $Z_i$ (characteristic admittance $r_i = 1/Z_i$) as depicted in FIG. 3 for N=2.

If in FIG. 3 the incoming traveling pressure waves are denoted by $P_i^+$, where $i = 1,...,N$, the outgoing pressure waves are given by Eq. (1) as follows:

$$P_i^- = P_j - P_i^+ \quad \text{Eq.(1)}$$

where $P_j$ in Eq.(1) is the resultant junction pressure given as follows:

$$P_j = \sum_{i=1}^{N} \alpha_i P_i^+$$

$$\text{Eqs. (2)}$$

where

$$\alpha_i = (2\Gamma_i)/\left(\sum_{\ell=1}^{N} \Gamma_\ell\right)$$

For N=2,

$$P_j = \alpha_1 P_1^+ + \alpha_2 P_2^+$$
$$\alpha_1 = (2r_1)/(r_1 + r_2)$$
$$\alpha_2 = 2 - \alpha_1$$

Define the reflection coefficient by $k=\alpha_1-1$, then from Eq. 1,

$$P_1^- = P_j - P_1^+$$
$$= (\alpha_1 - 1)P_1^+ + \alpha_2 P_2^-$$
$$P_1^- = kP_1^+ + (1 - k)P_2^+$$
$$P_2^- = \alpha_1 P_1^+ + (\alpha_2 - 1)P_2^+$$
$$P_2^- = (k + 1)P_1^+ - kP_2^+$$

Thus, we have, for N=2,

$$P_1^- = P_2^+ + k(P_1^+ - P_2^+)$$
$$P_2^- = P_1^+ + k(P_1^+ - P_2^+) \quad \text{Eqs. (3)}$$

which is the one-multiplier lattice filter section (minus its unit delay). More generally, an N-way intersection requires N multiplies and N-1 additions to obtain $P_j$, and one addition for each outgoing wave, for a total of N multiplies and 2N-1 additions.

The series flow-junction is equivalent to the parallel pressure-junction. The series pressure-junction or the parallel flow-junction can be found by use of duality.

### Cascade Waveguide Chains - FIG. 4

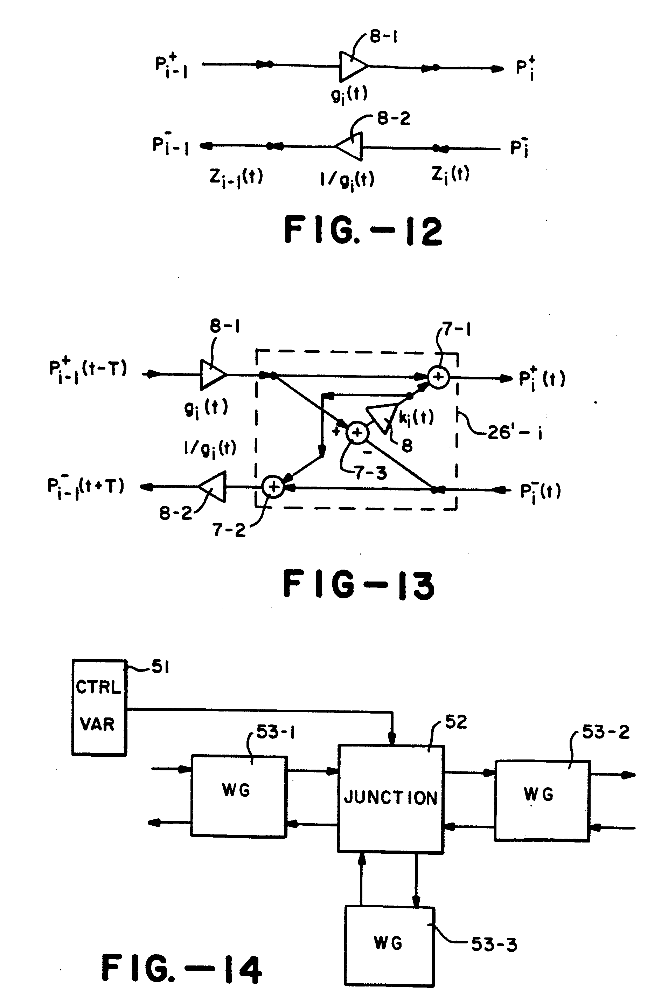

The basic waveguide chain 25 is shown in FIG.4. Each junction 26-1, 26-2, ..., 26-i, ..., 26-M enclosing the symbol $k_i(t)$ denotes scattering junction characterized by $k_i(t)$. In FIG. 4, the junction 26-i typically utilizes multipliers (M) 8 and adders(+) 7 to form the junction. In FIG. 4, the multipliers 8-1, 8-2, 8-3 and 8-4 multiply by the factors $[1+k(i)]$, $[-k_i(t)]$, $[1-k_i(t)]$, and $[k_i(t)]$, respectively. An alternative junction implementation 26'-i of FIG. 13 requires only one multiply. The junction 26-2 in FIG. 4 corresponds, for example, to the junction 12 in FIG. 3. Similarly, the delays 27-1 and 27-2 in FIG. 4 correspond to the branches 15 and 16, respectively, in FIG. 3. The Kelly-Lochbaum junctions 26-i and one-multiply junction 26'-i (see FIG. 13) or any other type of lossless junction may be used for junction 26. In particular, the two-multiply lattice (not shown) and normalized ladder (FIG. 11) scattering junctions can be employed. The waveguide 25 employs delays 27 between each scattering junction 26 along both the top and bottom signal paths, unlike conventional ladder and lattice filters. Note that the junction 26-i of FIG. 4 employs four multipliers and two adds while junction 26'-i of FIG. 13 employs one multiply and three adds.

## Waveguide Variations - FIGS. 4-14

Reduction of junction 26 to other forms is merely a matter of pushing delays 27 along the top rail around to the bottom rail, so that each bottom-rail delay becomes 2T seconds ($Z^{-2T}$) instead of T seconds $Z^{-T}$. Such an operation is possible because of the termination at the right by an infinite (or zero) characteristic impedance 6 in FIG. 4. In the time-varying case, pushing a delay through a multiply results in a corresponding time advance of the multiplier coefficient.

Imagine each delay element 27 in FIG. 4 being divided into halves, denoted by a delay of T/2 seconds. Then any waveguide can be built from sections such as shown in FIG. 5.

By a series of transformations, the two input-signal delays are pushed through the junction to the two output delays. A similar sequence of moves pushes the two output delays into the two input branches. Consequently, we can replace any waveguide section of the form shown in FIG. 5 by a section of the form shown in FIG. 6 or FIG. 7.

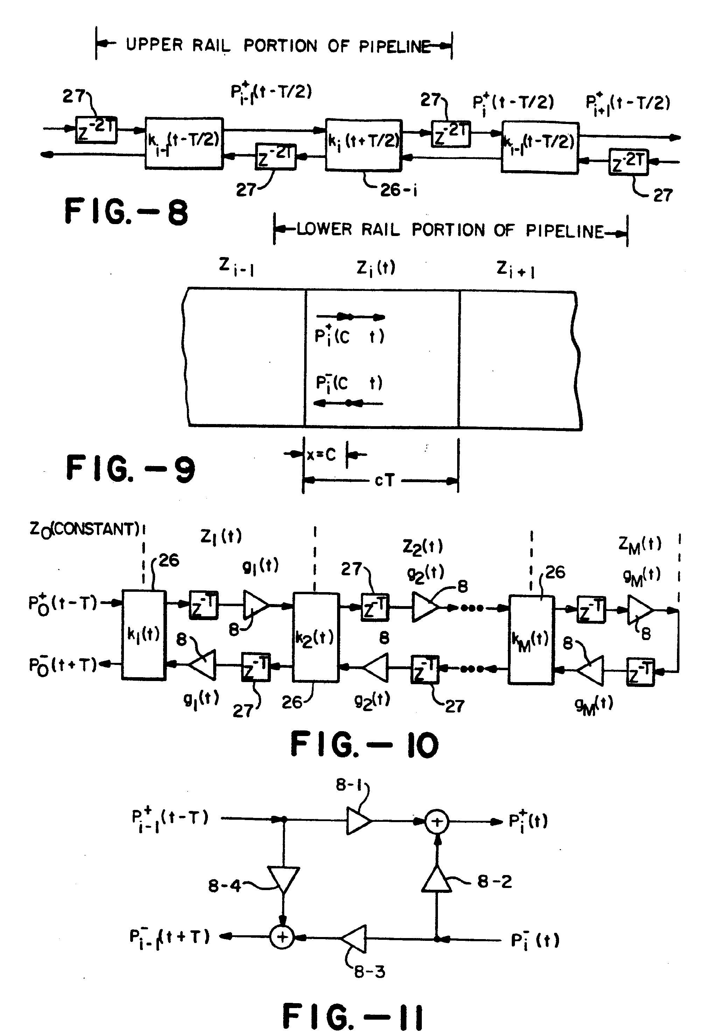

By alternately choosing the structure of FIG. 6 and 7, the structure of FIG. 8 is obtained. This structure has some advantages worth considering: (1) it consolidates delays to length 2T as do conventional lattice/ladder structures, (2) it does not require a termination by an infinite characteristic impedance, allowing it to be extended to networks of arbitrary topology (e.g., multiport branching, intersection, and looping), and (3) there is no long delay-free signal path along the upper rail as in conventional structures - a pipeline segment is only two sections long. This structure, termed the 'half-rate waveguide filter", appears to have better overall characteristics than any other digital filter structure for many applications. Advantage (2) makes it especially valuable for modeling physical systems.

Finally, successive substitutions of the section of FIG. 6 and reapplication of the delay consolidation transformation lead to the conventional ladder or lattice filter structure. The termination at the right by a total reflection (shown as 6 in FIG. 4) is required to obtain this structure. Consequently, conventional lattice filters cannot be extended on the right in a physically meaningful way. Also, creating network topologies more complex than a simple series (or acyclic tree) of waveguide sections is not immediately possible because of the delay-free path along the top rail. For example, the output of a conventional structure cannot be fed back to the input.

## Energy and Power

The instantaneous power in a waveguide containing instantaneous pressure P and flow U is defined as the product of pressure and flow as follows:

$$\underline{P} = PU = (P^+ + P^-)(U^+ + U^-) = \underline{P}^+ + \underline{P}^- \quad \text{Eq.(4)}$$

where,

$$\underline{P}^+ = P^+ U^+ = Z(U^+)^2 = \Gamma(P^+)^2$$
$$\underline{P}^- = P^- U^- = -Z(U^-)^2 = -\Gamma(P^-)^2 \quad \text{Eqs.(5)}$$

define the right-going and left-going power, respectively.

For the N-way waveguide junction, we have, using Kirchoff's node equations, Eq.(6) as follows:

$$\underline{P}_j \triangleq \sum_{i=1}^{N} P_i U_i = \sum_{i=1}^{N} P_j U_i = P_j \sum_{i=1}^{N} U_i = 0 \qquad \text{Eq. (6)}$$

Thus, the N-way junction is lossless; no net power, active or reactive, flows into or away from the junction.

## Quantization Effects

While the ideal waveguide junction is lossless, finite digital wordlength effects can make exactly lossless networks unrealizable. In fixed-point arithmetic, the product of two numbers requires more bits (in general) for exact representation than either of the multiplicands. If there is a feedback loop around a product, the number of bits needed to represent exactly a circulating signal grows without bound. Therefore, some round-off rule must be included in a finite-precision implementation. The guaranteed absence of limit cycles and overflow oscillations is tantamount to ensuring that all finite-wordlength effects result in power absorption at each junction, and never power creation. If magnitude truncation is used on all outgoing waves, then limit cycles and overflow oscillations are suppressed. Magnitude truncation results in greater losses than necessary to suppress quantization effects. More refined schemes are possible. In particular, by saving and accumulating the low-order half of each multiply at a junction, energy can be exactly preserved in spite of finite precision computations.

## Signal Power in Time-Varying Waveguides

The convention is adopted that the time variation of the characteristic impedance does not alter the traveling pressure waves $P_i^\pm$. In this case, the power represented by a traveling pressure wave is modulated by the changing characteristic impedance as it propagates. The actual power becomes inversely proportional to characteristic impedance:

$$\underline{P}_i(x,t) = \underline{P}_i^+(x,t) + \underline{P}_i^-(x,t) = \frac{[P_i^+(x,t)]^2 - [P_i^-(x,t)]^2}{Z_i(t)} \quad \text{Eq.(7)}$$

This power modulation causes no difficulties in the Lyapunov theory which proves absence of limit cycles and overflow oscillations because it occurs identically in both the finite-precision and infinite-precision filters. However, in some applications it may be desirable to compensate for the power modulation so that changes in the characteristic impedances of the waveguides do not affect the power of the signals propagating within.

Consider an arbitrary point in the $i^{th}$ waveguide at time t and distance $x=c\tau$ measured from the left boundary, as shown in FIG. 9. The right-going pressure is $P_i^+(x,t)$ and the left-going pressure is $P_i^-(x,t)$. In the absence of scaling, the waveguide section behaves (according to our definition of the propagation medium properties) as a pressure delay line, and we have $P_i^+(x,t)=P_i^+(0,t-\tau)$ and $P_i^-(x,t)=P_i^-(0,t+\tau)=P_i^-(cT,t-T+\tau)$. The left-going and right-going components of the signal power are $[P_i^-(x,t)]^2/Z_i(t)$ and $[P_i^+(x,t)]^2/Z_i(t)$, respectively.

Below, three methods are discussed for making signal power invariant with respect to time-varying branch impedances.

## Normalized Waveguides

Suppose the traveling waves are scaled as the characteristic impedance changes in order to hold signal power fixed. Any level can be chosen as a reference, but perhaps it is most natural to fix the power of each wave to that which it had upon entry to the section. In this case, it is quickly verified that the proper scaling is:

$$\tilde{P}_i^+(x,t) = [(Z_i(t))/(Z_i(t-\tau))]^{\frac{1}{2}} \; P_i^+(0,t-\tau), \quad x=c\tau$$

$$\text{Eqs. (8)}$$

$$\tilde{P}_i^-(x,t) = [(Z_i(t))/(Z_i(t-T+\tau))]^{\frac{1}{2}} \; P_i^-(cT,t-T+\tau)$$

In practice, there is no need to perform the scaling until the signal actually reaches a junction. Thus, we implement

$$\tilde{P}_i^+(cT,t) = g_i(t) P_i^+(0,t-T)$$

$$\text{Eqs. (9)}$$

$$\tilde{P}_i^-(0,t) = g_i(t) P_i^-(cT,t-T)$$

where

$$g_i(t) = [(Z_i(t))/(Z_i(t-T))]^{\frac{1}{2}}$$

This normalization is depicted in FIG. 10. In FIG. 10, each of the multipliers 8 multiplies the signal by $g_i(t)$ as given by Eqs.(9). In the single-argument notation used earlier, Eqs.(9) become

$$\tilde{P}_i^+(t-T) = g_i(t) P_i^+(t-T)$$

Eqs. (10)

$$\tilde{P}_i^-(t) = g_i(t) P_i^-(t)$$

This normalization strategy has the property that the time-varying waveguides (as well as the junctions) conserve signal power. If the scattering junctions are implemented with one-multiply structures, then the number of multiplies per section rises to three when power is normalized. There are three additions as in the unnormalized case. In some situations (such as in the two-stage structure) it may be acceptable to normalize at fewer points; the normalizing multiplies can be pushed through the scattering junctions and combined with other normalizing multiplies, much in the same way delays were pushed through the junctions to obtain standard ladder/lattice forms. In physical modeling applications, normalizations can be limited to opposite ends of a long cascade of sections with no interior output "taps."

To ensure passivity of a normalized-waveguide with finite-precision calculations, it suffices to perform magnitude truncation after multiplication by $g_i(t)$. Alternatively, extended precision can be used within the scattering junction.

Normalized Waves

Another approach to normalization is to propagate rms-normalized waves in the waveguide. In this case, each delay-line contains

$$\tilde{P}_i^+(x,t) = P_i^+(x,t) / [Z_i(t)]^{\frac{1}{2}}$$

Eqs. (11)

$$\tilde{P}_i^-(x,t) = P_i^-(x,t) / [Z_i(t)]^{\frac{1}{2}}$$

We now consider $\tilde{P}^\pm$ (instead of $P^\pm$) to be invariant with respect to the characteristic impedance. In this case,

$$\tilde{P}_i^+(c,t) = P_i^+(cT,t) / [Z_i(t)]^{\frac{1}{2}} = P_i^+(0,t-T) / [Z_i(t-T)]^{\frac{1}{2}} = \tilde{P}_i^+(t-T)$$

The scattering equations become

$$[Z_i(t)]^{\frac{1}{2}} \tilde{P}_i^+(0,t) =$$
$$[1+k_i(t)][Z_{i-1}(t)]^{\frac{1}{2}} \tilde{P}_{i-1}^+(cT,t) - k_i(t)[Z_i(t)]^{\frac{1}{2}} \tilde{P}_i(0,t)$$

Eqs. (12)

$$[Z_{i-1}(t)]^{\frac{1}{2}} \tilde{P}_{i-1}^-(cT,t) =$$
$$k_i(t)[Z_{i-1}(t)]^{\frac{1}{2}} \tilde{P}_{i-1}^+(ct,T) + [1-k_i(t)][Z_i(t)]^{\frac{1}{2}} \tilde{P}_i^-(t)$$

or, solving for $\tilde{P}_i^{\pm}$,

$$\tilde{P}_i^+(0,t) =$$
$$[1+k_i(t)] \; [(Z_{i-1}(t))/(Z_i(t))]^{\frac{1}{2}} \; \tilde{P}_{i-1}^+(cT,t)-k_i(t)\tilde{P}_i^-(0,t)$$

$$\text{Eqs. (13)}$$

$$\tilde{P}_{i-1}^-(cT,t) =$$
$$k_i(t)\tilde{P}_{i-1}^+(ct,T)+[1-k_i(t)] \; [(Z_i(t))/(Z_{i-1}(t))]^{\frac{1}{2}} \; \tilde{P}_i^-(t)$$

But,

$$(Z_{i-1}(t))/(Z_i(t)) \; = \; (1 - k_i(t))/(1 + k_i(t)) \quad \text{Eq.(14)}$$

whence

$$[1 + k_i(t)] \; [(Z_{i-1}(t))/(Z_i(t))]^{\frac{1}{2}} \; =$$
$$[1 - k_i(t)] \; [(Z_i(t))/(Z_{i-1}(t))]^{\frac{1}{2}} \; = \; [1 - k_i^2(t)]^{\frac{1}{2}} \quad \text{Eq.(15)}$$

The final scattering equations for normalized waves are

$$\tilde{P}_i^+(0,t)=c_i(t)\tilde{P}_{i-1}^+(cT,t)-s_i(t)\tilde{P}_i^-(0,t)$$

$$\text{Eqs. (16)}$$

$$\tilde{P}_{i-1}^-(cT,t)=s_i(t)\tilde{P}_{i-1}^+(ct,T)+c_i(t)\tilde{P}_i^-(t)$$

where

$$s_i(t) \; \triangleq \; k_i(t)$$

$$\text{Eqs. (17)}$$

$$c_i(t) \; \triangleq \; [1-k_i^2(t)]^{\frac{1}{2}}$$

can be viewed as the sine and cosine, respectively, of a single angle $\theta_i(t)=\sin^{-1}[k_i(t)]$ which characterizes the junction. FIG. 11 illustrates the Kelly-Lochbaum junction as it applies to normalized waves. In FIG. 11, the multipliers 8-1, 8-2, 8-3, and 8-4 multiply by the factors $[1-k_i^2(t)]^{\frac{1}{2}}$, $-k_i(t)$, $[1-k_i^2(t)]^{\frac{1}{2}}$, and $k_i(t)$, respectively. In FIG. 11, $k_i(t)$ cannot be factored out to obtain a one-multiply structure. The four-multiply structure of FIG. 11 is used in the normalized ladder filter (NLF).

Note that normalizing the outputs of the delay lines saves one multiply relative to the NLF which propagates normalized waves. However, there are other differences to consider. In the case of normalized waves, duals are easier, that is, changing the propagation variable from pressure to velocity or vice versa in the $i^{th}$ section requires no signal normalization, and the forward and reverse reflection coefficients are unchanged. Only sign-reversal is required for the reverse path. Also, in the case of normalized waves, the rms signal level is the same whether or not pressure or velocity is used. While appealing from a "balance of power" standpoint, normalizing all signals by their rms level can be a disadvantage. In the case of normalized delay-line outputs, dynamic range can be minimized by choosing the smaller of pressure and velocity as the variable of propagation.

## Transformer-Coupled Waveguides

Still another approach to the normalization of time-varying waveguide filters is perhaps the most convenient of all. So far, the least expensive normalization technique is the normalized-waveguide structure, requiring only three multiplies per section rather than four in the normalized-wave case. Unfortunately, in the normalized-waveguide case, changing the characteristic impedance of section i results in a changing of the reflection coefficients in both adjacent scattering junctions. Of course, a single junction can be modulated in isolation by changing all downstream characteristic impedances by the same ratio. But this does not help if the filtering network is not a cascade chain or acyclic tree of waveguide sections. A more convenient local variation in characteristic impedance can be obtained using transformer coupling. A transformer joins two waveguide sections of differing characteristic impedance in such a way that signal power is preserved and no scattering occurs. It turns out that filter structures built using the transformer-coupled waveguide are equivalent to those using the normalized-wave junction described in the previous subsection, but one of the four multiplies can be traded for an addition.

From Ohm's Law and the power equation, an impedance discontinuity can be bridged with no power change and no scattering using the following relations:

$$[P_i^+]^2/[Z_i(t)] = [P_{i-1}^+]^2/[Z_{i-1}(t)] \quad \text{Eqs.}(18)$$

$$[P_i^-]^2/[Z_i(t)] = [P_{i-1}^-]^2/[Z_{i-1}(t)]$$

Therefore, the junction equations for a transformer can be chosen as

$$P_i^+ = g_i(t) P_{i-1}^+$$

$$\text{Eqs. (19)}$$

$$P_{i-1}^- = g_i^{-1}(t) P_i^-$$

where, from Eq. (14)

$$g_i(t) \underset{=}{\Delta} [(Z_i(t))/(Z_{i-1}(t))]^{1/2} = [(1 + k_i(t))/(1 - k_i(t)]^{1/2} \quad \text{Eq.}(20)$$

The choice of a negative square root corresponds to a gyrator. The gyrator is equivalent to a transformer in cascade with a dualizer. A dualizer is a direct implementation of Ohm's law (to within a scale factor) where the forward path is unchanged while the reverse path is negated. On one side of the dualizer there are pressure waves, and on the other side there are velocity waves. Ohm's law is a gyrator in cascade with a transformer whose scale factor equals the characteristic admittance.

The transformer-coupled junction is shown in FIG. 12. In FIG. 12, the multipliers 8-1 and 8-2 multiply by $g_i(t)$ and $1/g_i(t)$ where $g_i(t)$ equals $[Z_i(t)/Z_{i-1}(t)]^{1/2}$. A single junction can be modulated, even in arbitrary network topologies, by inserting a transformer immediately to the left (or right) of the junction. Conceptually, the characteristic impedance is not changed over the delay-line portion of the waveguide section; instead it is changed to the new time-varying value just before (or after) it meets the junction. When velocity is the wave variable, the coefficients $g_i(t)$ and $g_i^{-1}(t)$ in FIG. 12 are swapped (or inverted).

So, as in the normalized waveguide case, the two extra multipliers 8-1 and 8-2 of FIG. 12 provide two extra multiplies per section relating to the unnormalized (one-multiply) case, thereby achieving time-varying digital filters which do not modulate stored signal energy. Moreover, transformers enable the scattering junctions to be varied independently, without having to propagate time-varying impedance ratios throughout the waveguide network.

In FIG. 13, the one-multiply junction 26'-i includes three adders 7-1, 7-2, and 7-3, where adder 7-3 functions to subtract the second rail signal, $P_i^-(t)$, from the first rail signal, $[P_{i-1}^+(t-T)][g_i(t)]$. Junction 26'-i also includes the multiplier 8 which multiplies the output from adder 7-3 by $k_i(t)$. FIG. 13 utilizes the junction of FIG. 12 in the form of multipliers- 8-1 and 8-2 which multiply the first and second rail signals by $g_i(t)$ and $1/g_i(t)$, respectively, where $g_i(t)$ equals $[(1-k_i(t))/(1+k_i(t))]^{1/2}$.

It is interesting to note that the transformer-coupled waveguide of FIG. 13 and the wave-normalized waveguide (shown in FIG. 11) are equivalent. One simple proof is to start with a transformer and a Kelly-Lochbaum junction, move the transformer scale factors inside the junction, combine terms, and arrive at FIG. 11. The practical importance of this equivalence is that the normalized ladder filter (NLF) can be implemented with only three multiplies and three additions instead of four multiplies and two additions.

The limit cycles and overflow oscillations are easily eliminated in a waveguide structure, which precisely simulates a sampled interconnection of ideal transmissions line sections. Furthermore, the waveguide can be transformed into all well-known ladder and lattice filter structures simply by pushing delays around to the bottom rail in the special case of a cascade, reflectively terminated waveguide network. Therefore, aside from specific round-off error and time skew in the signal and filter coefficients, the samples computed in the waveguide and the samples computed in other ladder/lattice filters are identical (between junctions).

The waveguide structure gives a precise implementation of physical wave phenomena in time-varying media. This property is valuable in its own right for simulation purposes. The present invention permits the delay or advance of time-varying coefficient streams in order to obtain physically correct time-varying waveguide (or acoustic tube) simulations using standard lattice/ladder structures. Also, the necessary time corrections for the traveling waves, needed to output a simulated pressure or velocity, are achieved.

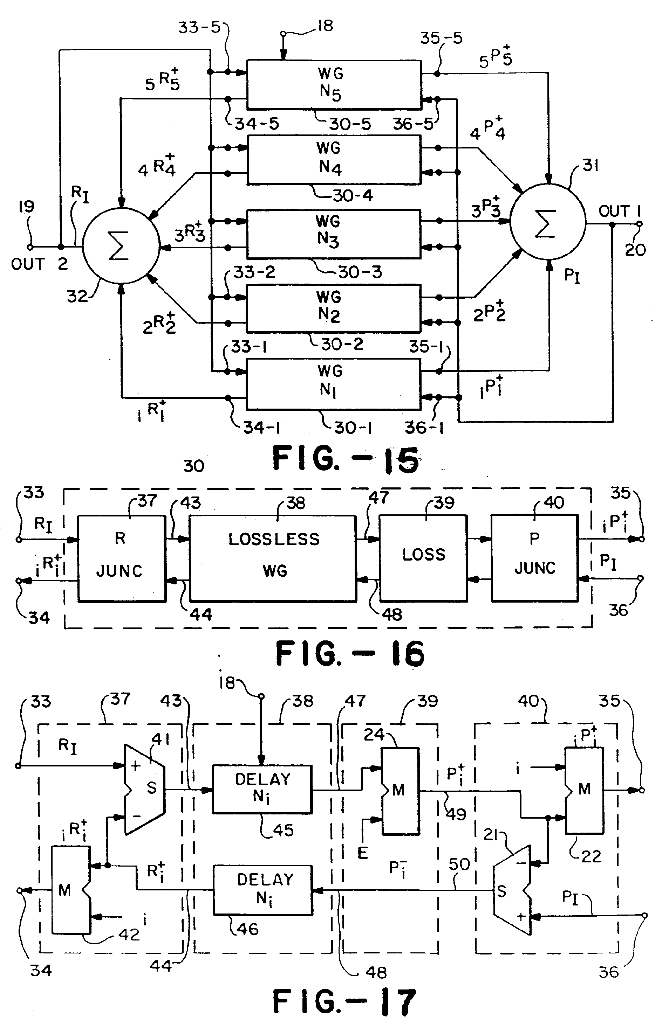

## Waveguide Networks with Non-Linear Junction - FIG. 14

In FIG. 14, a plurality of waveguides 53 are interconnected by a non-linear junction 52. In the particular arrangement of FIG. 14, the junction 52 has three ports, one for each of the waveguide networks 53-1, 53-2, and 53-3. However, junction 52 can be an N-port junction interconnecting N waveguides or waveguide networks 53. The control variable register 51 provides one or more control variables as inputs to the junction 52. In FIG. 14 when only a single waveguide is utilized, the single waveguide becomes a special case, single-port arrangement of FIG. 14. Single port examples of the FIG. 14 structure are described hereinafter in connection with reed instruments such as clarinets or saxophones. Multi-port examples of the FIG 14 structure are described hereinafter in connection with stringed instruments such as violins. A multi-port variation of the FIG. 14 structure is also described hereinafter in connection with a reverberator according to the present invention. Many other instruments not described in detail can also be simulated. For example, flutes, organs, recorders, bassoon, oboes, all brasses, and percussion instruments can be simulated by single or multi-port, linear or non-linear junctions in combination with one or more waveguides or waveguide networks.

## Reverberator - FIG. 15

One lossless reverberator according to the present invention is augmented as shown in FIG. 15 by one or more simple loss factors (typically of the form $1-2^{-n}$) in waveguides 30 to set the reverberation decay times to any desired values. The time, $T_{60}$, over which the reverberation decays 60 dB is arbitrary. This decoupling of reverberation time from structure incurs no loss of generality in the present invention.

Some of the waveguides 30 of the network are determined to give specific early reflections, while others are chosen to provide a desirable texture in the late reverberation. An optimality criterion for the late reverberation is to maximize homogeneity of the impulse response by making it look like exponentially decaying white noise.

The waveguide networks of the reverberation system of the present invention allow every signal path to appear as a feedback branch around every other signal path. This connectivity richness facilitates development of dense late reverberation. Furthermore, the energy conserving properties of the waveguide networks can be maintained in the time-varying case which allows the breaking up of unwanted patterns in the late reverberation by subtly changing the reverberator in a way that does not modulate the reverberation decay profile. Finally, the explicit conservation of signal energy provides an easy way to completely suppress limit cycles and overflow oscillations.

In FIG. 15, one typical waveguide reverberator is shown including five waveguides (branches) formed by the waveguides 30-1, 30-2, ..., 30-5. The waveguides 30 are connected to junctions 31 and 32. The waveguides 30-1 through 30-5 have first rail inputs 33-1 through 33-5, respectively, have first rail outputs 35-1 through 35-5, respectively, have second rail inputs 36-1 through 36-5, respectively, and have second rail outputs 34-1 through 34-5, respectively. The first rail outputs 35-i, where i has values from 1 to 5, includes the output signals $\alpha_i P_i^+$, for i = 1 through 5. The outputs 35-i each connect to the summing node 31. Summing node 31 is an adder which adds all of the $\alpha_i P^+$ signals to form the junction pressure signal $P_J$. The $P_J$ signal connects in common to each of the second rail inputs 36-1 through 36-5. The $P_J$ signal at terminal 20 is typically used to provide an output from the reverberator of FIG. 15. In FIG. 15, the input 18 is typically connected to at least one of the waveguides 30 such as waveguide 30-5.

In FIG. 15, the waveguides 30-1 through 30-5 provide the second rail outputs 34-i for i = 1 to 5. The outputs 34-i provide the signals $\alpha_i R_i^+$ which in turn connect as inputs to the summing node 32. The summing node 32 sums all of the signals $\alpha_i R_i^+$ to form the node signal $R_J$ at terminal 19. A second output is typically taken from terminal 19. Additionally, the $R_J$ signal from summing node 32 connects in common to all of the first rail inputs 33-1 through 33-5.

## Reverberator Waveguide - FIGS. 16 and 17

In FIG. 16, further details of the waveguides 30 of FIG. 15 are shown. Typically, each of the waveguides 30 in FIG. 15 includes an R junction 37, a lossless waveguide 38, a loss unit 39 and a P junction 40.

In FIG. 17, further details of the typical waveguide of FIG. 16 are shown. The R junction 37 includes a subtractor 41 and a multiplier 42. The subtractor 41 subtracts $R_i^+$ from the $R_I$ signal to provide the $R_i^-$ signal on line 43. The multiplier 42 multiplies the $R_i^+$ times a gain factor, $\alpha_i$, to provide the signal $\alpha_i R_i^+$ signal at output terminal 34-i.

The lossless waveguide 38 includes a lossless delay 45 and a lossless delay 46. The delay 45 delays by a delay, N. With the signal input to the delay on line 43 equal to $R_i^-(t)$, the delayed output signal on line 47 is equal to $R_i^-(t-N)$. Similarly the delay 46 delays the input signal $P_i^-(t)$ by N to form the delayed signal on line 44 equal by definition to $P_i^-(t-N)$, which is equal to the $R_i^+(t)$ signal.

In FIG. 17, the loss unit 39, in one particular embodiment, includes a multiplier 24. Multiplier 24 multiplies the signal on line 47 by $\varepsilon$ to provide on the output the $P_i^+(t)$ signal equal to $\varepsilon R_i^-(t-N)$. While the loss circuit in the form of multiplier 24 has been inserted in the line 47, the loss circuit may alternatively be placed also in any one or more of the lines 43, 44, 47 or 48.

In FIG. 17, the P junction 40 typically includes a subtractor 21 and a multiplier 22. The subtractor 21 receives the $P_i^+$ signal and subtracts it from the junction pressure signal $P_I$ to produce the $P_i^-$ signal. Multiplier 22 multiplies the $P_i^+$ signal by $\alpha_i$ to form the $\alpha_i P_i^+$ signal.

In summary, the reverberator of FIGS. 15-17 consists of waveguides 30-1 through 30-5 connected together to form an arbitrary network. The waveguides 30-1 through 30-5 can be referred to as "branches" and their points of intersection 31 and 32 as "junctions" or "nodes".

Reflections are created by a mismatch between the admittances $\Gamma_i$ of the intersecting waveguides. The admittance is the inverse of the characteristic impedance $Z_i$. Setting the waveguide admittances all equal is acceptable as long as the waveguide delays $N_i$ are different. Equal characteristic admittances means that when a signal comes into a junction of waveguides, it will be split equally into all outgoing waveguides. In the reverberator of FIG. 19, equal characteristic admittances result in $\alpha_i = 2/5$ for all i. Choosing a power of Z for the number of branches means $\alpha_i$ is a power of Z and can therefore be implemented in binary arithmetic by means of a shift operation.

If a waveguide with small admittance connects to a waveguide of much higher admittance, the pressure wave will be partially reflected with a sign reversal. In the limit:

a pressure wave is completely reflected with a sign reversal when it encounters an admittance which is infinitely larger than the one in which it was traveling;

a pressure wave is completely reflected with no sign reversal when it encounters an admittance which is infinitely smaller than the one in which it was traveling;

a pressure wave is not reflected at all (complete transmission) when it encounters an admittance which is the same as the one in which it was traveling in, the "matched-impedance" case.

## Time-Varying Reverberation

The effect of amplitude modulation of a waveguide admittance is to vary the admittance away from its original value. In order for the network to remain lossless, the sum of incoming scattering coefficients [$\alpha_i$ of Eq.(2)] must equal 2. Let $\Gamma_i(t)$ denote the time-varying branch admittances. Then from Eq.(2)

$$\alpha_i(t) = (2\Gamma_i(t)) / (\sum_{i=1}^{N} \Gamma_i(t))$$

and

$$\sum_{i=1}^{N} \alpha_i(t) = 2$$

at all times.

The objective is to vary $\alpha_i(t)$ in a complex waveguide network such that

$$\sum_{i=1}^{N} \alpha_i(t) = 2 \quad \text{and} \quad \alpha_i(t) = 2\Gamma_i(t) / \sum_{i=1}^{N} \Gamma_i(t)$$

for some waveguide admittance values $\Gamma_i(t)$.

The easiest case is the two-junction network such as shown in FIG. 15. In this case, the $\alpha_i(t)$ are identical at the two junctions.

One time-varying reverberation technique in the two-junction case is to vary the $\Gamma_i$ such that

$$\sum_{i=1}^{N} \Gamma_i = c$$

for some constant c. Then

$$\alpha_i(t) = 2\Gamma_i(t)/c,$$

and

$$\sum_{i=1}^{N} \alpha_i(t) = 2$$

as c. Then

$$\alpha_i(t) = 2\Gamma_i(t)/c,$$

and

$$\sum_{i=1}^{N} \alpha_i(t) = 2$$

as required for losslessness of the network. A special case is where $\Gamma_i+\Gamma_j=c_i$ in pairs. Another method for the time varying case is, at each junction, to provide one "reflection-free port" (RFP). Such a port is created when the admittance of one waveguide (that connected to the RFP) is equal to the sum of the admittances of all other waveguides meeting at that junction. In this implementation, the waveguide of the RFP has admittance 1, and it does not vary with time. We call this a "special" waveguide. Since every waveguide must connect to exactly two junctions, a special waveguide provides a RFP at two different junctions simultaneously. (A special waveguide is not very useful as a self-loop at some junction due to the next constraint.)

Given a reflection-free port caused by a special waveguide of admittance 1, the sum of the remaining waveguide admittances is 1. Since the waveguide connected to the reflection-free port is time-invariant, the sum of all time-varying admittances will be 1.

A simple method for time-varying reverberation using a RFP is to pair off the time-varying waveguides so that their admittances sum to 1 in pairs. This pairing is handy because a pair is the smallest number of mutually constrained waveguides that can be arranged. When there are more than two nodes (junctions), simple complementary pairing of time-varying junctions may be difficult.

## Claims

1. A digital reverberation system comprising: a branched network including a plurality of branches formed of digital waveguides (11; 30) and a plurality of junctions (12; 26; 31,32) interconnecting the waveguides, input means (3; 15; 18) for providing to the network an audio input signal to be reverberated; output means (3; 16; 19,20) for providing at least one reverberation output signal from the network; and means (39) for introducing losses into signals propagating in the network; wherein:

   each waveguide (11; 30) includes two signal paths running parallel to each other for propagating signals in opposite directions wherein at least one of the paths includes a delay (45,46), each waveguide having a first end and a second end, said first end having an input to a first of said two paths and an output from a second of said two paths and said second end having an input to the second path and an output from the first path, each waveguide (11; 30) having at least one of its ends connected to a junction (12; 26; 31,32);

   characterised in that at least one of the junctions (12; 26; 31,32) has at least three waveguide ends connected to it and signals arriving at each junction (12; 26; 31,32) from a particular waveguide end are partially transmitted to every other waveguide end connected to the junction and partially reflected back to said particular waveguide end.

2. A digital reverberation system as claimed in claim 1, wherein the signal paths both comprise digital delay lines.

3. A digital reverberation system as claimed in claim 2, wherein the delay lines in any particular waveguide provide delays which are substantially equal to one another.

4. A digital reverberation system as claimed in claim 2 or 3, wherein the input means (15; 18) comprises a digital waveguide having one end thereof connected to a junction, wherein the input signal is introduced at the other end of said waveguide.

5. A digital reverberation system as claimed in claim 2,3 or 4, wherein the output means (16; 19,20) comprises a digital waveguide having one end thereof connected to a junction (12; 31,32) of the network, wherein an output signal is obtained at the other end thereof.

6. A digital reverberation system as claimed any of claims 2 to 5, wherein each junction comprises at least one of a multiplier (8) and adder (7) (Figure 4).

7. A digital reverberation system as claimed in claim 6 wherein multiplication coefficients of said multipliers vary with time, thereby achieving time varying reverberation characteristics.

8. A digital reverberation system as claimed in any of claims 2 to 7, wherein the means for introducing losses is configured to provide a desired reverberation time.

9. A digital reverberation system as claimed in claim 8, wherein said means for introducing losses introduces a loss factor of the form $1-2^{-n}$ to at least one signal propagating in the network, n being a whole number larger than 0.

10. A digital reverberation system as claimed in any of claims 2 to 9, wherein at least one junction has time varying characteristics to vary at least one of the relative transmission and reflection to the waveguide ends connected to the junction as a function of time.

11. A digital reverberation system as claimed in any of claims 2 to 10, wherein each junction comprises multipliers (8) and adders (7) configured to interconnect the output of each waveguide end connected to the junction with the input of each waveguide end connected to the junction so as to multiply the signal from each waveguide end by a particular coefficient and sum it with multiplied signals from every other waveguide end thereby to provide a desired signal to the input of each waveguide end connected to the junction.

12. A digital reverberation system as claimed in any of claims 2 to 11, wherein at least one junction (31,32) is configured so that a signal from any waveguide end is passed in equal proportion to the inputs of all waveguide ends connected to the junction.

13. A digital reverberation system as claimed in any of claims 2 to 12, including first and second junctions (31,32) and at least three parallel waveguides each having a predetermined delay amount, each having a first end connected to the first junction and a second end connected to the second junction.

14. The digital reverberation system of any of claims 2 to 13, wherein:
    at least one waveguide is comprised of:
    a first delay element (45) in the first delay line (43,47,49);
    a second delay element (46) in the second delay line (44,48,50);
    means (39) for introducing a loss in signals propagating in at least one of the delay lines;
    first subtracter means (41) for subtracting from the signal at the first end input (33) a signal on the second delay line (44) following the output of the second delay element (46) to provide a signal to the first delay element (45);
    second subtracter means (21) for subtracting from the signal at the second end input (36) a signal on the first delay line (49) following the first delay element (45) to provide a signal to the second delay element (46);
    first delay line multiplier means (24) for multiplying a signal $P_i^+$ on the first delay line following the first delay element by a factor $\alpha_i R_i^+$ and
    wherein a first junction (31) receives signals from delay lines connected to it and forms a sum $P_I$ as follows:

$$P_I = \sum_{i=1}^{I} \alpha_i P_i^+$$

and provides the signal $P_I$ to each waveguide input connected to the junction, and wherein a second junction (32) receives signals from delay lines connected to it and forms a sum $R_I$ as follows:

$$R_I = \sum_{i=1}^{I} \alpha_i R_i^+$$

and provides the signal $R_I$ to each waveguide input connected to the junction, n and i being whole numbers greater than 0.

15. The digital reverberation system of any of claims 2 to 14, wherein said network includes a plurality, i, where i > 2 of waveguides connected in parallel between first and second junctions such that the first end of each waveguide is connected to the first junction (31) and the second end of each waveguide is connected to the second junction (32), said waveguides forming first end output signals, $P_i^+$, and second end output signals, $R_i^+$, said first junction (31) including means for summing the first end output signals, $P_i^+$, to form a first end summed signal, $P_I$, and including means for connecting said first end summed signal as an output to said first end of each of said waveguides, and wherein said second junction (32) includes means for summing said second end output signals, $R_i^+$, to form a summed second end output signal, $R_I$, and including means for connecting said second end summed signal as an input to said second end of each of said waveguides.

16. The digital reverberation system of any of claims 2 to 15, wherein each waveguide has a characteristic impedance and where the sum of all of the characteristic impedances for the waveguides connected to a junction sums to a constant.

**Patentansprüche**

1. Digitales Nachhallsystem, umfassend: ein verzweigtes Netzwerk mit einer Mehrzahl von Verzweigungen, die aus digitalen Wellenleitern (11; 30) gebildet werden, und einer Mehrzahl von Verbindungen (12; 26; 31, 32), die die Wellenleiter verbinden, eine Eingangseinrichtung (3; 15; 18;), um dem Netzwerk ein Audio-Eingangssignal, das nachhallen soll, zur Verfügung zu stellen; eine Ausgangseinrichtung (3; 16; 19, 20), um wenigstens ein Nachhall-Ausgangssignal aus dem Netzwerk zu liefern, und eine Einrichtung (39), um Verluste in Signale einzubringen, die sich in dem Netzwerk ausbreiten, worin:

jeder Wellenleiter (11; 30) zwei Signalwege enthält, die parallel zueinander verlaufen, um Signale in entgegengesetzten Richtungen zu verbreiten, worin wenigstens einer der Wege eine Verzögerung (45, 46) enthält, wobei jeder Wellenleiter ein erstes Ende und ein zweites Ende besitzt, wobei das erste Ende einen Eingang zu einem ersten der zwei Wege und einen Ausgang von einem zweiten der zwei Wege besitzt, und das zweite Ende einen Eingang zu dem zweiten Weg und einen Ausgang von dem ersten Weg besitzt, wobei wenigstens eines der Enden jedes Wellenleiters (11; 30) an eine Verbindung (12; 26; 31, 32) angeschlossen ist;

dadurch gekennzeichnet, daß wenigstens eine der Verbindungen (12; 26; 31, 32) wenigstens drei mit ihr verbundene Wellenleiterenden besitzt und Signale, die an jeder Verbindung (12; 26; 31, 32) von einem einzelnen Wellenleiterende ankommen, teilweise zu jedem anderen an die Verbindung angeschlossenen Wellenleiterende übertragen und teilweise zu dem einzelnen Wellenleiterende zurückreflektiert werden.

2.  Digitales Nachhallsystem nach Anspruch 1, bei dem beide Signalwege digitale Verzögerungsleitungen umfassen.

3.  Digitales Nachhallsystem nach Anspruch 2, bei dem die Verzögerungsleitungen in jedem einzelnen Wellenleiter Verzögerungen liefern, die im wesentlichen einander gleich sind.

4.  Digitales Nachhallsystem nach Anspruch 2 oder 3, bei dem die Eingangseinrichtung (15; 18) einen digitalen Wellenleiter umfaßt, dessen eines Ende an eine Verbindung angeschlossen ist, wobei das Eingangssignal an dem anderen Ende des Wellenleiters eingeführt wird.

5.  Digitales Nachhallsystem nach Anspruch 2, 3 oder 4, bei dem die Ausgangseinrichtung (16; 19, 20) einen digitalen Wellenleiter umfaßt, dessen eines Ende an eine Verbindung (12; 31, 32) des Netzwerks angeschlossen ist, wobei Ausgangssignal an seinem anderen Ende erhalten wird.

6.  Digitales Nachhallsystem nach einem der Ansprüche 2 bis 5, bei dem jede Verbindung wenigstens einen Multiplizierer (8) und einen Addierer (7) (Fig. 4) umfaßt.

7.  Digitales Nachhallsystem nach Anspruch 6, bei dem die Multiplikationskoeffizienten sich mit der Zeit verändern, um dadurch zeitveränderliche Nachhall-Eigenschaften zu erzielen.

8.  Digitales Nachhallsystem nach einem der Ansprüche 2 bis 7, bei dem die Einrichtung zum Einführen von Verlusten konfiguriert ist, um eine gewünschte Nachhallzeit zu liefern.

9.  Digitales Nachhallsystem nach Anspruch 8, bei dem die Einrichtung zum Einführen von Verlusten einen Verlustfaktor der Form $1-2^{-n}$ in wenigstens ein Signal, das sich in dem Netzwerk ausbreitet, einbringt, wobei n eine Ganzzahl größer als 0 ist.

10. Digitales Nachhallsystem nach einem der Ansprüche 2 bis 9, bei dem wenigstens eine Verbindung zeitveränderliche Eigenschaften besitzt, um wenigstens eine relative Übertragung oder Reflexion zu den an die Verbindung angeschlossenen Wellenleiterenden als eine Funktion der Zeit zu verändern.

11. Digitales Nachhallsystem nach einem der Ansprüche 2 bis 10, bei dem jede Verbindung Multiplizierer (8) und Addierer (7) umfaßt, die konfiguriert sind, um den Ausgang jedes an die Verbindung angeschlossenen Wellenleiterendes mit dem Eingang jedes an die Verbindung angeschlossenen Wellenleiterendes zu verbinden, um das Signal von jedem jedem Wellenleiterende mit einem einzelnen Koeffizienten zu multiplizieren und es mit multiplizierten Signalen von jedem anderen Wellenleiterende zu summieren, um dadurch dem Eingang jedes an die Verbindung angeschlossenen Wellenleiterendes ein gewünschtes Signal zur Verfügung zu stellen.

12. Digitales Nachhallsystem nach einem der Ansprüche 2 bis 11, bei dem wenigstens eine Verbindung (31, 32) so konfiguriert ist, daß ein Signal von irgendeinem Wellenleiterende im gleichen Verhältnis zu den Eingängen von allen an die Verbindung angeschlossenen Wellenleiterenden durchgelassen wird.

13. Digitales Nachhallsystem nach einem der Ansprüche 2 bis 12, das eine erste und zweite Verbindung (31, 32) und wenigstens drei parallele Wellenleiter mit je einem vorbestimmten Verzögerungsbetrag enthält,

EP 0 248 527 B1

wobei jeder ein erstes an die erste Verbindung angeschlossenes Ende und ein zweites an die zweite Verbindung angeschlossenes Ende besitzt.

14. Digitales Nachhallsystem nach einem der Ansprüche 2 bis 13, worin:
wenigstens ein Wellenleiter umfaßt:
ein erstes Verzögerungselement (45) in der ersten Verzögerungsleitung (43, 47, 49);
ein zweites Verzögerungselement (46) in der zweiten Verzögerungsleitung (44, 48, 50);
eine Einrichtung (39) zum Einbringen eines Verlustes in Signale, die sich in wenigstens einer der Verzögerungsleitungen ausbreiten;
eine erste Subtraktionseinrichtung (41), um von dem Signal am ersten Endeeingang (33) ein Signal auf der zweiten Verzögerungsleitung (44), die dem Ausgang des zweiten Verzögerungselements (46) folgt, zu subtrahieren, um dem ersten Verzögerungselement (45) ein Signal zur Verfügung zu stellen;
eine zweite Subtraktionseinrichtung (21), um von dem Signal am zweiten Endeeingang (36) ein Signal auf der ersten Verzögerungsleitung (49), die dem ersten Verzögerungselement (45) folgt, zu subtrahieren, um dem zweiten Verzögerungselement (46) ein Signal zur Verfügung zu stellen;
eine erste Verzögerungsleitung-Multipliziereinrichtung (24), um ein Signal $P_i^+$ auf der ersten Verzögerungsleitung, die dem ersten Verzögerungselement folgt, mit einem Faktor $\alpha_i R_i^+$ zu multiplizieren und worin eine erste Verbindung (31) Signale von an ihr angeschlossenen Verzögerungsleitungen empfängt und eine Summe $P_I$ wie folgt bildet:

$$P_I = \sum_{i=1}^{I} a_i P_i^+$$

und das Signal $P_I$ jedem an die Verbindung angeschlossenen Wellenleitereingang zur Verfügung stellt, und worin eine zweite Verbindung (32) Signale von an ihr angeschlossenen Verzögerungsleitungen empfängt und eine Summe $R_I$ wie folgt bildet:

$$R_I = \sum_{i=1}^{I} a_i R_i^+$$

und das Signal $R_I$ jedem an die Verbindung angeschlossenen Wellenleitereingang zur Verfügung stellt, wobei n und i Ganzzahlen größer als 0 sind.

15. Digitales Nachhallsystem nach einem der Ansprüche 2 bis 14, bei dem das Netzwerk eine Mehrzahl, i, wo i > 2, von Wellenleitern enthält, die zwischen einer ersten und zweiten Verbindung parallel geschaltet sind, so daß das erste Ende jedes Wellenleiters an die erste Verbindung (31) und das zweite Ende jedes Wellenleiters an die zweite Verbindung (32) angeschlossen ist, wobei die Wellenleiter ein erstes Endeausgangssignal, $P_i^+$, und ein zweites Endeausgangssignal, $R_i^+$, bilden, wobei die erste Verbindung (31) eine Einrichtung zum Summieren der ersten Endeausgangssignale, $P_i^+$, um ein erstes endsummiertes Signal $P_I$ zu bilden, sowie eine Einrichtung enthält, um das erste endsummierte Signal als ein Ausgang mit dem ersten Ende jedes der Wellenleiter zu verbinden, und worin die zweite Verbindung (32) eine Einrichtung enthält, um die zweiten Endeausgangssignale, $R_i^+$, zu summieren, um ein summiertes zweites Endeausgangssignal, $R_I$, zu bilden, und eine Einrichtung enthält, um das zweite endsummierte Signal als ein Eingang mit dem zweiten Ende jedes der Wellenleiter zu verbinden.

16. Digitales Nachhallsystem nach einem der Ansprüche 2 bis 15, bei dem jeder Wellenleiter einen Wellenwiderstand besitzt und wo die Summe aller Wellenwiderstände für die an eine Verbindung angeschlossenen Wellenleiter eine konstante Summe ergibt.

## Revendications

1. Un système de réverbération numérique comprenant :
un réseau à branches multiples, comprenant un ensemble de branches formées par des guides d'ondes numériques (11 ; 30) et un ensemble de jonctions (12 ; 26 ; 31, 32) interconnectant les guides d'ondes, des moyens d'entrée (3 ; 15 ; 18) pour appliquer au réseau un signal d'entrée audio à réverbérer ; des

17

moyens de sortie (3 ; 16 ; 19, 20) pour fournir au moins un signal de sortie de réverbération à partir du réseau ; et des moyens (39) pour introduire des pertes dans des signaux qui se propagent dans le réseau ; dans lequel :

chaque guide d'ondes (11 ; 30) comprend deux voies de signal s'étendant parallèlement l'une à l'autre pour propager des signaux dans des directions opposées, l'une au moins des voies comprenant un élément de retard (45, 46), chaque guide d'ondes ayant une première extrémité et une seconde extrémité, la première extrémité comportant une entrée pour une première des deux voies et une sortie pour une seconde des deux voies, et la seconde extrémité comportant une entrée pour la seconde voie et une sortie pour la première voie, chaque guide d'ondes (11 ; 30) ayant l'une au moins de ses extrémités connectées à une jonction (12 ; 26 ; 31, 32) ;

caractérisé en ce que l'une au moins des jonctions (12 ; 26 ; 31, 32) est connectée à au moins trois extrémités de guides d'ondes et des signaux qui arrivent à chaque jonction (12 ; 26 ; 31, 32) à partir d'une extrémité de guide d'ondes particulière sont partiellement transmis vers chaque autre extrémité de guide d'ondes connectée à la jonction, et partiellement réfléchis en arrière vers cette extrémité de guide d'ondes particulière.

2. Un système de réverbération numérique selon la revendication 1, dans lequel les voies de signal consistent toutes deux en lignes à retard numériques.

3. Un système de réverbération numérique selon la revendication 2, dans lequel les lignes à retard dans n'importe quel guide d'ondes particulier produisent des retards qui sont pratiquement égaux les uns aux autres.

4. Un système de réverbération numérique selon la revendication 2 ou 3, dans lequel les moyens d'entrée (15 ; 18) comprennent un guide d'ondes numérique dont une extrémité est connectée à une jonction, et dans lequel le signal d'entrée est introduit à l'autre extrémité de ce guide d'ondes.

5. Un système de réverbération numérique selon la revendication 2, 3 ou 4, dans lequel les moyens de sortie (16 ; 19, 20) comprennent un guide d'ondes numérique dont une extrémité est connectée à une jonction (12 ; 31, 32) du réseau, et dans lequel un signal de sortie est obtenu à son autre extrémité.

6. Un système de réverbération numérique selon l'une quelconque des revendications 2 à 5, dans lequel chaque jonction comprend au moins un multiplieur (8) et un additionneur (7) (figure 4).

7. Un système de réverbération numérique selon la revendication 6, dans lequel des coefficients de multiplication des multiplieurs varient au cours du temps, ce qui permet d'obtenir des caractéristiques de réverbération variant dans le temps.

8. Un système de réverbération numérique selon l'une quelconque des revendications 2 à 7, dans lequel les moyens destinés à introduire des pertes ont une configuration qui procure un temps de réverbération désiré.

9. Un système de réverbération numérique selon la revendication 8, dans lequel les moyens destinés à introduire des pertes introduisent un facteur de pertes de la forme $1-2^{-n}$ pour au moins un signal se propageant dans le réseau, n étant un nombre entier supérieur à 0.

10. Un système de réverbération numérique selon l'une quelconque des revendications 2 à 9, dans lequel au moins une jonction a des caractéristiques variant dans le temps, pour faire varier en fonction du temps l'un au moins des paramètres comprenant la transmission et la réflexion relatives vers les extrémités de guide d'ondes qui sont connectées à la jonction.

11. Un système de réverbération numérique selon l'une quelconque des revendications 2 à 10, dans lequel chaque jonction comprend des multiplieurs (8) et des additionneurs (7) ayant une configuration qui permet d'interconnecter la sortie de chaque extrémité de guide d'ondes connectée à la jonction avec l'entrée de chaque extrémité de guide d'ondes connectée à la jonction, de façon à multiplier le signal provenant de chaque extrémité de guide d'ondes par un coefficient particulier et à faire la somme du signal obtenu avec des signaux multipliés provenant de chaque autre extrémité de guide d'ondes, pour appliquer ainsi un signal désiré à l'entrée de chaque extrémité de guide d'ondes qui est connectée à la jonction.

12. Un système de réverbération numérique selon l'une quelconque des revendications 2 à 11, dans lequel au moins une jonction (31, 32) a une configuration telle qu'un signal provenant d'une extrémité de guide d'onde quelconque est transmis en proportions égales vers les entrées de toutes les extrémités de guides d'ondes connectées à la jonction.

13. Un système de réverbération numérique selon l'une quelconque des revendications 2 à 12, comprenant des première et seconde jonctions (31, 32) et au moins trois guides d'ondes parallèles ayant chacun une valeur de retard prédéterminée, et ayant chacun une première extrémité connectée à la première jonction et une seconde extrémité connectée à la seconde jonction.

14. Le système de réverbération numérique de l'une quelconque des revendications 2 à 13, dans lequel :
au moins un guide d'ondes est constitué par :
un premier élément de retard (45) dans la première ligne à retard (43, 47, 49) ;
un second élément de retard (46) dans la seconde ligne à retard (44, 48, 50) ;
des moyens (39) pour introduire une perte dans des signaux qui se propagent dans l'une au moins des lignes à retard ;
des premiers moyens soustracteurs (41) pour soustraire du signal à l'entrée de la première extrémité (33) un signal présent sur la seconde ligne à retard (44) après la sortie du second élément de retard (46), pour appliquer un signal au premier élément de retard (45) ;
des seconds moyens soustracteurs (21) pour soustraire du signal à l'entrée de la seconde extrémité (36) un signal présent sur la première ligne à retard (49) après le premier élément de retard (45), pour appliquer un signal au second élément de retard (46) ;
des premiers moyens multiplieurs de ligne à retard (24) pour multiplier un signal $P_i^+$ sur la première ligne à retard après le premier élément de retard par un facteur $\alpha_i R_i^+$, et
dans lequel une première jonction (31) reçoit des signaux provenant de lignes à retard qui lui sont connectées et elle forme une somme $P_I$ de la façon suivante :

$$P_I = \sum_{i=1}^{I} \propto_i P_i^+$$

et elle applique le signal $P_I$ à chaque entrée de guide d'ondes connectée à la jonction, et dans lequel une seconde jonction (32) reçoit des signaux provenant de lignes à retard qui lui sont connectées et elle forme une somme $R_I$ de la manière suivante :

$$R_I = \sum_{i=1}^{I} \propto_i R_i^+$$

et elle applique le signal $R_I$ à chaque entrée de guide d'ondes connectée à la jonction, n et i étant des nombres entiers supérieurs à 0.

15. Le système de réverbération numérique de l'une quelconque des revendications 2 à 14, dans lequel le réseau comprend un ensemble, i, (i > 2) de guides d'ondes connectés en parallèle entre des première et seconde jonctions, de façon que la première extrémité de chaque guide d'ondes soit connectée à la première jonction (31) et la seconde extrémité de chaque guide d'ondes soit connectée à la seconde jonction (32), ces guides d'ondes formant des signaux de sortie de première extrémité, $P_i^+$, et des signaux de sortie de seconde extrémité, $R_i^+$, la première jonction (31) comprenant des moyens pour faire la somme des signaux de sortie de première extrémité, $P_i^+$, afin de former un signal sommé de première extrémité, $P_I$, et comprenant des moyens pour fournir le signal sommé de première extrémité à titre de signal de sortie de la première extrémité de chacun des guides d'ondes, et dans lequel la seconde jonction (32) comprend des moyens pour faire la somme des signaux de sortie de seconde extrémité, $R_i^+$, pour former un signal de sortie sommé de seconde extrémité, $R_I$, et elle comprend des moyens pour appliquer le signal sommé de seconde extrémité à titre de signal d'entrée à la seconde extrémité de chacun des guides d'ondes.

16. Le système de réverbération numérique de l'une quelconque des revendications 2 à 15, dans lequel chaque guide d'ondes a une impédance caractéristique, et dans lequel la somme de toutes les impédances caractéristiques des guides d'ondes connectés à une jonction est une constante.

FIG. — 1

FIG. — 2

FIG. — 3

FIG.—4

FIG.—5

FIG.—6

FIG.—7

UPPER RAIL PORTION OF PIPELINE

$P_{i-1}^{+}(t-T/2)$

$P_{i}^{+}(t-T/2)$

$P_{i+1}^{+}(t-T/2)$

27

$z^{-2T}$

$k_{i-1}(t-T/2)$

$z^{-2T}$

$k_{i}(t+T/2)$

27

$z^{-2T}$

$k_{i-1}(t-T/2)$

$z^{-2T}$

27

27

26-i

27

**FIG.-8**

LOWER RAIL PORTION OF PIPELINE

$Z_{i-1}$

$Z_{i}(t)$

$Z_{i+1}$

$P_{i}^{+}(C \quad t)$

$P_{i}^{-}(C \quad t)$

x=C

cT

**FIG.-9**

$Z_{0}(CONSTANT)$

$Z_{1}(t)$

$Z_{2}(t)$

$Z_{M}(t)$

26

$g_{1}(t)$

27

$g_{2}(t)$

8

26

$g_{M}(t)$

$P_{0}^{+}(t-T)$

$k_{1}(t)$

$z^{-T}$

8

$k_{2}(t)$

$z^{-T}$

8

$k_{M}(t)$

$z^{-T}$

8

8

8

8

$P_{0}^{-}(t+T)$

$k_{1}(t)$

8

$z^{-T}$

$k_{2}(t)$

$z^{-T}$

8

$k_{M}(t)$

$z^{-T}$

$g_{1}(t)$

27

26

$g_{2}(t)$

27

$g_{M}(t)$

**FIG. — 10**

8-1

$P_{i-1}^{+}(t-T)$

$P_{i}^{+}(t)$

8-4

8-2

$P_{i-1}^{-}(t+T)$

8-3

$P_{i}^{-}(t)$

**FIG. — 11**

FIG.-12

FIG-13

FIG.-14

24

FIG. — 15

FIG. — 16

FIG. — 17